Europäisches Patentamt

European Patent Office

Office européen des brevets

(19)

(11) **EP 1 162 829 B1**

(12) **EUROPEAN PATENT SPECIFICATION**

(45) Date of publication and mention
of the grant of the patent:
**26.10.2005 Bulletin 2005/43**

(51) Int Cl.[7]: **G06K 9/40**, G06T 5/00

(21) Application number: **01302939.2**

(22) Date of filing: **29.03.2001**

(54) **Image signal characterization**

Bildsignalcharakterisierung

Caractérisation d'un signal d'image

(84) Designated Contracting States:
**DE FR GB**

(30) Priority: **31.05.2000 US 207957 P**
**19.10.2000 KR 2000061545**

(43) Date of publication of application:
**12.12.2001 Bulletin 2001/50**

(73) Proprietor: **SAMSUNG ELECTRONICS CO., LTD.**
**Suwon-si, Gyeonggi-do 442-742 (KR)**

(72) Inventors:
• **Shin, Hyun-doo,**
**510-1302 Mugigae Maeul Cheongku**
**Seongnam-city, Kyungki-do (KR)**
• **Choi, Yang-lim, 210-1509 Hanshin Apt.**
**Seongnam-si, Gyeonggi-do (KR)**

(74) Representative: **Geary, Stuart Lloyd et al**
**Venner Shipley LLP**
**20 Little Britain**
**London EC1A 7DH (GB)**

(56) References cited:
**US-A- 5 280 289        US-A- 5 293 433**

• **MU-YEN CHEN ET AL: "Radar image denoising
by recursive thresholding" PROCEEDINGS OF
THE INTERNATIONAL CONFERENCE ON IMAGE
PROCESSING (ICIP) LAUSANNE, SEPT. 16 - 19,
1996, NEW YORK, IEEE, US, vol. 1, 16 September
1996 (1996-09-16), pages 395-398, XP010202230
ISBN: 0-7803-3259-8**
• **ARGENTI F ET AL: "Transmission of wavelet
transform coded TV images on a noisy channel"
PROCEEDINGS OF THE INTERNATIONAL
CONFERENCE ON COMMUNICATIONS (ICC).
GENEVA, MAY 23 - 26, 1993, NEW YORK, IEEE,
US, vol. 3, 23 May 1993 (1993-05-23), pages
386-390, XP010136929 ISBN: 0-7803-0950-2**

## Description

The present invention relates to a method of characterizing an image signal and an apparatus therefor.

To distinguish one image from another image, it is regarded as important to give attention to or perceive a coherent pattern. This is regarded as being very important for purposes such as storing, sorting and retrieval of images for image recognition and image manipulation. Also, this can be a decisive element in obtaining better performance in the field of pattern matching using texture features.

Raw pixel values may be projected vertically or horizontally for extracting a peculiar pattern within image data. If a repetitive pattern is included in an image, the pattern is definitely indicated within the projected image. An auto-correlation method may be applied to the resultant projected image and periodic characteristics can be identified or magnified. However, pattern repetitiveness found within the projected image does not have a fine period in general due to a combination of other repetitive patterns and noise.

A conventional method for reducing noise using an automated periodic pattern counting mechanism can partially solve the problem. However, if the noise is removed, there is a problem in that the pattern repetitiveness of the image is changed.

A method of generating characterizing signal for an image signal, according to the present invention, is characterized by:

（a） projecting pixel data of an image signal along a predetermined axis;
（b） calculating a pattern quantizing value for the projected pixel data and decomposing the projected image data;
（c） repeatedly denoising the decomposed data using a threshold value, calculating a new pattern quantizing value for the denoised data and increasing the denoising threshold value until the quantizing value is not the same for two successive iterations; and
（d） generating a pattern repetitiveness characterization signal for said image signal using the penultimate pattern quantizing value and the threshold value,

wherein said decomposition is in a wavelet basis and said decomposed data is the averaged sum result of said decomposition.

Preferably, step (b) comprises repeatedly decomposing the projected pixel data down one level and calculating a new pattern quantizing value until the new pattern quantizing value differs from the previous pattern quantizing value and the penultimate quantizing value obtained in step (b) is used as an intial quantizing value in step (c), and said decompositions are in a wavelet basis and the averaged swum result of each of said repeated decompositions constitutes the projected pixel data for the next iteration.

Preferably, the characterization signal is based on the penultimate quantizing value and the threshold.

An image signal characterizing apparatus comprising an image signal input, a characterizing signal output and processing means, is characterized in that the processing means is programmed to perform a method according to the present invention on a signal received at said signal input and output the resultant characterizing signal at said signal output.

A method of grouping images having similar texture characteristics within an image database in which a plurality of images are stored, according to the present invention comprises:

perfoming a characterizing signal generating method according to the present invention on a plurality of image signals, and
grouping the images according to their respective characterization signals.

Embodiments of the present invention will now be described, by way of example, with reference to the accompanying drawings, in which:-

Figure 1 is a flowchart illustrating the main steps of a first method of describing pattern repetitiveness of an image according to the present invention; and
Figure 2 is a flowchart illustrating the main steps of a second method of describing pattern repetitiveness of an image according to the present invention.

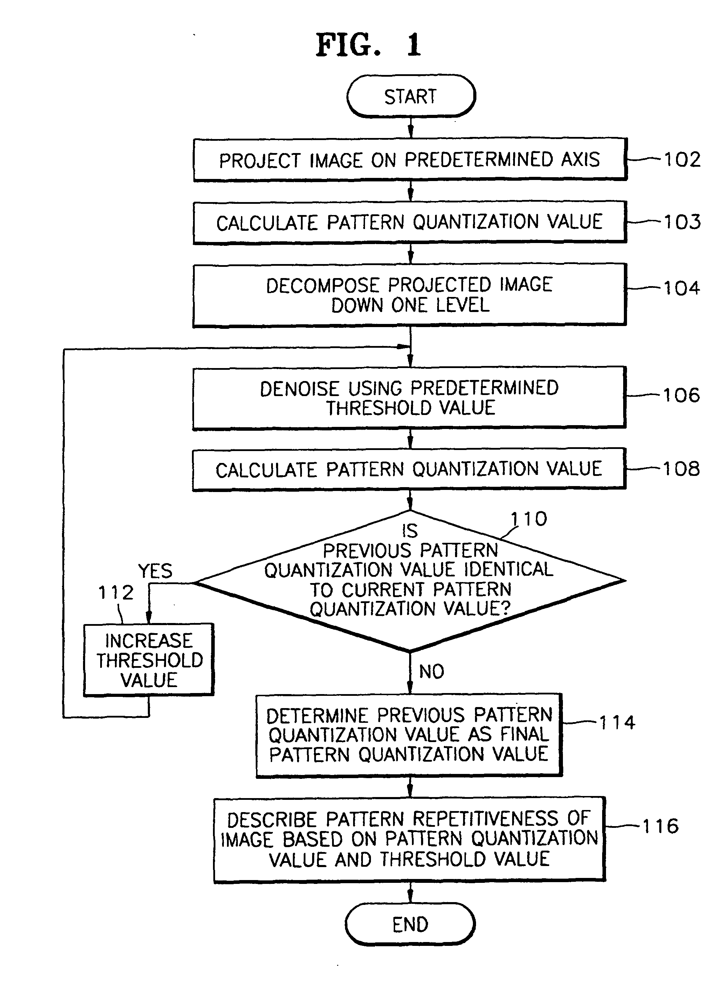

Referring to Figure 1, first, an image is projected on a predetermined axis having a predetermined direction (step 102). A pattern quantizing value of the projected image is calculated (step 103). It is possible to use a generally known automated scheme such as a counting algorithm or the calculation of the quantizing value by the naked eye, so that a quantizing value determined on the basis of the pattern repetitiveness period is obtained. Hereinafter, the quantizing value is indicated as by $P$.

Now, the projected image is decomposed down one level (step 104). Here, the decomposition can be performed on the basis of a discrete wavelet transform. Because the wavelet transform acts as a step of denoising, a low frequency component is extracted from the projected image by the wavelet transform. For example, if the length of feature vectors $\bar{A}$ indicating a projection is $2^n$, the respective feature vectors can be decomposed into $n$ levels. That is, the feature vectors $\bar{A}$ can be represented by

$$\bar{A} = (a_1, a_2, a_3, ..., a_{2^n}) \qquad (1)$$

Also, the feature vectors $\bar{A}$ can be decomposed into an averaged sum $\bar{A}^1$ and an averaged difference $\bar{D}^1$. That is, it can be rewritten as $\bar{A} = \bar{A}^1 + \bar{D}^1$.

Also, when L is the length of a support of wavelet used, and basis vectors $\bar{V}1_1$ within a scaling space are

$$\bar{V}_1^{\ 1} = (0,0,0,...,\alpha_1,\alpha_2,...,\alpha_L,0,...,0) \qquad (2)$$

, and basis vectors $\overline{W}1_1$ within a wavelet space combined with the scaling space are

$$\bar{V}_1^{\ 1} = (0,0,0,...,\beta_1,\beta_2,...,\alpha_L,0,...,0) \qquad (3)$$

, the averaged sum $\bar{A}^1$ and the averaged difference $\bar{D}^1$ can be represented respectively by

$$\bar{A}^1 = \sum_{i=1}^{t=2^{n-1}} \left( \bar{A} \cdot \bar{V}_1^1 \right) \bar{V}_1^1 \qquad (4)$$

$$\bar{D}^1 = \sum_{i=1}^{t=2^{n-1}} \left( \bar{A} \cdot \overline{W}_1^1 \right) \overline{W}_1^1 \qquad (5)$$

To keep a certain periodicity, the basis vectors should be wrapped around to the start. That is, the number of zeros to be placed from the left in each of the vectors is determined by a subscript i to be 2i.

There exists a relationship between $\alpha$s and $\beta$s which make the use of terms of the averaged sum and the averaged difference on a scaling coefficient and a wavelet coefficient respectively rather appropriate. For example, the relationship is the following: $\beta_i = -1^{t+1}\alpha_{L+1-i}$.

Then, using the following formulae,

$$\bar{A}^k = \sum_{i=1}^{t=2^{n-k}} \left( \bar{A}^{k-1} \cdot \bar{V}_1^k \right) \bar{V}_1^k \qquad (6)$$

$$\bar{D}^k = \sum_{i=1}^{t=2^{n-k}} \left( \bar{A}^{k-1} \cdot \overline{W}_1^k \right) \overline{W}_1^k \qquad (7)$$

a successive decomposition can be done on the previous averaged sum. Due to the nature of the calculation for decomposing into the averaged sum and the averaged difference, in the averaged sum, almost all essential information for describing original feature vectors would be retained, whereas in the averaged difference, the feature vector portions belonging to highly changeable realms would be retained. In this preferred embodiment, an example in which an image is decomposed down one level to generally denoise will be described.

Next, denoising from the result data decomposed using a predetermined threshold value is performed (step 106), and a pattern quantizing value of the denoised data is calculated (step 108).

It is determined whether the previous pattern quantizing value is identical to the current quantizing value (step 110). The case where the previous quantizing value is identical to the current quantizing value means that pattern regularity has not changed and has been retained even though the data has been denoised using the corresponding threshold value. However, the case where the previous pattern quantizing value is different from the current quantizing value means that pattern regularity changed when the data was denoised using the corresponding threshold value.

Therefore, if the previous pattern quantizing value is identical to the current pattern quantizing value, the threshold value is increased (step 112) to perform step 106. If the previous pattern quantizing value is not identical to the current pattern quantizing value, the previous pattern quantizing value is determined as a final pattern quantizing value (step 114). Now, the pattern repetitiveness of the image is described on the basis of the pattern quantizing value obtained in step 114 and the threshold value (step 116). The quantizing value and the threshold value are indicated as numbers, and it is possible to describe the pattern repetitiveness of the image expressed using the numbers. Also, according to the method of describing pattern repetitiveness of an image, the image is effectively denoised, so that the pattern repetitiveness of the image can be effectively described.

According to the pattern repetitiveness describing method, information about the pattern repetitiveness of the image is extracted, and denoising is performed with reference to the extracted pattern repetitiveness, so that the original image is effectively denoised without damaging the pattern repetitiveness of the image. Also, more definite pattern repetitiveness is obtained by denoising, and the images having periodic patterns can be classified in detail and stored by indexing using the quantizing value decided on the basis of the pattern repetitiveness of the obtained image.

In the above described first preferred embodiment, an example, in which an image is decomposed down one level is described. However, it is possible to decompose an image down a plurality of levels.

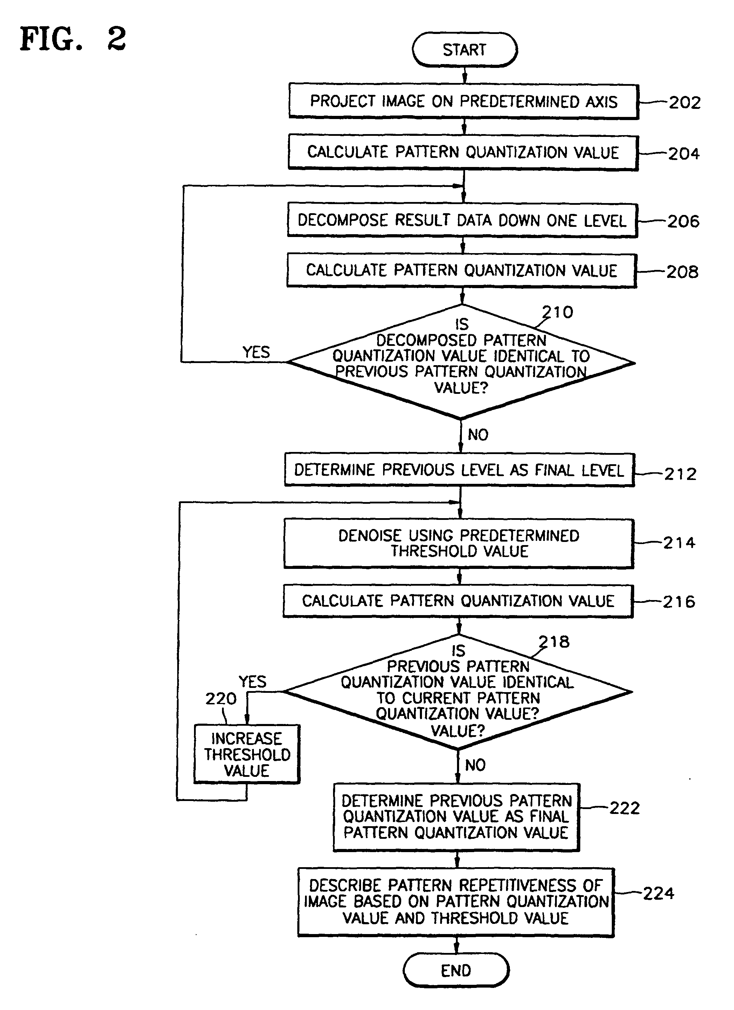

Referring to Figure 2, first, an image is projected on an axis having a predetermined direction (step 202). A pattern quantizing value of the projected image is calculated (step 204). It is possible to use an automated scheme such as a digitization algorithm or for the calculation of the quantizing value by the naked eye, so that a quantizing value decided on the basis of the repetitiveness period of the pattern is obtained. Hereinafter, the quantizing value is indicated as *P*.

Now, the projected image is decomposed down one level (step 206), and the quantizing value of the decomposed result data is calculated (step 208). Next, it is determined whether the previous pattern quantizing value is identical to the pattern quantizing value after the decomposition (step 210).

The case where the previous pattern quantizing value is identical to the pattern quantizing value after the decomposition means that pattern regularity has not changed even though the decomposed image has been denoised. However, the case where the previous pattern quantizing value is not identical to the pattern quantizing value after the decomposition means that pattern regularity has changed due to the denoising of the decomposed image.

Therefore, if the previous pattern quantizing value is identical to the pattern quantizing value after the decomposition, step 206 is performed, so that the result data is decomposed down one level, and the pattern quantizing value of the decomposed data is calculated (step 208), to determine whether the previous pattern quantizing value is identical to the pattern quantizing value after the decomposition (step 210). However, if the previous pattern quantizing value is not identical to the pattern quantizing value after the decomposition, a previous level is determined as a final level (step 212). Hereby, the decomposition is performed until the level at which the previous pattern quantizing value and the pattern quantizing value after the decomposition are retained as they are.

Now, the data of the level determined in the step 212 is denoised using a predetermined threshold value (step 214). Next, the pattern quantizing value of the denoised data is calculated (step 216), and it is determined whether the previous pattern quantizing value is identical to the current pattern quantizing value (step 218).

If it is determined that the previous pattern quantizing value is not identical to the current pattern quantizing value, the previous pattern quantizing value is determined to be the final pattern quantizing value (step 222). If it is determined that the previous pattern quantizing value is identical to the current pattern quantizing value, the threshold value is increased (step 220), and steps 214, 216, and 218 are repeatedly performed, so that the image is denoised until the threshold at which the current pattern quantizing value and the previous pattern quantizing value are retained as they are. Now, the pattern repetitiveness of the image will be described on the basis of the level number, pattern quantizing value, and the threshold value (step 224).

According to the pattern repetitiveness describing method of the present invention, the information about the pattern repetitiveness within the image is extracted, and the denoising is performed with reference to the information about the extracted pattern repetitiveness, so that the image is effectively denoised without damaging the pattern repetitiveness within the original image. Also, more definite pattern repetitiveness is obtained by denoising, and the images having the patterns can be classified in detail and stored by indexing using the quantizing value decided on the basis of the pattern repetitiveness of the obtained image.

Also, the method of describing pattern repetitiveness of an image can be applied to image indexing methods, and to grouping of the images having similar texture features within an image database in which a plurality of images are stored.

According to the method of grouping images, as described in the method of describing pattern repetitiveness of an image according to the first preferred embodiment of the present invention, the threshold value is increased until the pattern quantizing value is retained, and the decomposed data is denoised. The pattern repetitiveness vectors including the pattern quantizing value of the denoised data and the threshold value used for denoising are designated as pattern repetitiveness descriptors of the images. It is possible to group images having similar texture characteristics using the pattern repetitiveness descriptor of the image.

Also, according to the method of grouping images, as described in the method of describing pattern repetitiveness of an image according to the second preferred embodiment of the present invention, the decomposition is performed until the level at which the previous pattern quantizing value and the pattern quantizing value after the decomposition are retained as they are, so that the image is denoised, and the level number of the denoised data, the pattern quantizing value, and the threshold value used for denoising are determined as the pattern repetitiveness descriptor of the image. It is possible to group images having similar texture characteristics using the pattern repetitiveness descriptor of the image.

According to the methods of grouping images above described, the grouping is performed using the effectively denoised pattern repetitiveness, so that the performance of the grouping can be enhanced.

The method of describing pattern repetitiveness of an image according to the present invention can be written as a program executed on a personal or server computer. Program codes and code segments forming the program can be easily induced by computer programmers skilled in the art. Also, the program can be stored in computer-readable recording media. The recording media may be magnetic recording media or optical recording media. The program may also be transmitted as an electric or an electromagnetic signal.

The pattern repetitiveness describing method extracts information about the pattern repetitiveness of the image, and performs denoising with reference to the information about the extracted pattern repetitiveness to effectively denoise the original image without damaging the pattern repetitiveness of the original image. Also, more definite pattern repetitiveness can be obtained by denoising. Hereby, images having patterns can be classified in detail and stored by indexing using an exact quantizing value decided on the basis of definite pattern repetitiveness when a general known indexing scheme is applied.

A machine for characterizing images comprises an input for receiving image signals from a source thereof, a processor for processing received image signals and an output for outputting image characterization signals. The processor is programmed to perform one of the above-described methods on input image signals and output the resultant characterizing signals via the output. The images signals may be produced by a camera.

**Claims**

1. A method of generating characterizing signal for an image signal, the method being **characterized by**:-

    (a) projecting pixel data of an image signal along a predetermined axis;
    (b) calculating a pattern quantizing value for the projected pixel data and decomposing the projected image data;
    (c) repeatedly denoising the decomposed data using a threshold value, calculating a new pattern quantizing value for the denoised data and increasing the denoising threshold value until the quantizing value is not the same for two successive iterations; and
    (d) generating a pattern repetitiveness characterization signal for said image signal using the penultimate pattern quantizing value and the threshold value,

    wherein said decomposition is in a wavelet basis and said decomposed data is the averaged sum result of said decomposition.

2. A method according to claim 1, wherein:

    step (b) comprises repeatedly decomposing the projected pixel data down one level and calculating a new pattern quantizing value until the new pattern quantizing value differs from the previous pattern quantizing value and the penultimate quantizing value obtained in step (b) is used as an initial quantizing value in step (c); and
    said decompositions are in a wavelet basis and the averaged sum result of each of said repeated decompositions constitutes the projected pixel data for the next iteration.

3. A method according to claim 1 or 2, wherein the characterization signal is based on the penultimate quantizing value and the threshold.

4. An image signal characterizing apparatus comprising an image signal input, a characterizing signal output and processing means, **characterized in that** the processing means is programmed to perform a method according to claim 1, 2 or 3 on a signal received at said signal input and output the resultant characterizing signal at said signal output.

5. A method of grouping images having similar texture characteristics within an image database in which a plurality of images are stored, the method comprising:

    performing a method according to claim 1, 2 or 3 on a plurality of image signals, and
    grouping the images according to their respective characterization signals.

**Patentansprüche**

1. Verfahren zum Erzeugen eines charakterisierenden Signals für ein Bildsignal, wobei das Verfahren **gekennzeichnet ist durch**:

    (a) Projizieren von Pixel-Daten eines Bildsignals entlang einer vorbestimmten Achse;

    (b) Berechnen eines Muster-Quantifizierungswerts für die projizierten Pixel-Daten und Zerlegen der projizierten Bild-Daten;

    (c) wiederholte Rauschbereinigung in Bezug auf die zerlegten Daten unter Verwendung eines Schwellwerts, Berechnen eines neuen Muster-Quantifizierungswerts für die rauschbereinigten Daten und Erhöhen des Rauschbereinigungs-Schwellwerts, bis der Quantifizierungswert nicht derselbe für zwei aufeinanderfolgende Iterationen ist; und

    (d) Erzeugen eines Muster-Wiederholbarkeits-Charakterisierungssignals für das Bildsignal unter Verwendung des vorletzten Muster-Quantifizierungswerts und des Schwellwerts,

    wobei die Zerlegung in einer Wavelet-Basis vorliegt und die zerlegten Daten das gemittelte Summenergebnis der Zerlegung sind.

2. Verfahren nach Anspruch 1, wobei

Schritt (b) ein wiederholtes Zerlegen der projizierten Pixel-Daten nach unten ein Niveau und Berechnen eines neuen Muster-Quantfizierungswerts, bis sich der neue Muster-Quantifizierungswert von dem vorherigen Muster-Quantifizierungswert unterscheidet, und der vorletzte Quantifizierungswert, erhalten im Schritt (b), als ein Anfangs-Quantifizierungswert im Schritt (c) verwendet wird, aufweist; und

die Zerlegungen in einer Wavelet-Basis vorliegen und das gemittelte Summenergebnis jeder der wiederholten Zerlegungen die projizierten Pixel-Daten für die nächste Iteration bildet.

**3.** Verfahren nach Anspruch 1 oder 2, wobei das Charakterisierungssignal auf dem vorletzten Quantifizierungswert und dem Schweilwert basiert.

**4.** Bildsignal-Charakterisierungsvorrichtung, die eine Bildsignal-Eingabe, eine Charakterisierungssignal-Ausgabe und eine Verarbeitungseinrichtung aufweist, **dadurch gekennzeichnet, dass** die Verarbeitungseinrichtung so programmiert ist, um ein Verfahren nach Anspruch 1, 2 oder 3 an einem Signal, aufgenommen an der Signal-Eingabe, und eine Ausgabe des sich ergebenden Charakterisierungssignals an der Signal-Ausgabe durchzuführen.

**5.** Verfahren eines Gruppierens von Bildern, die ähnliche Aufbau-Charakteristika besitzen, innerhalb einer Bilddatenbank, in der eine Mehrzahl von Bildern gespeichert ist, wobei das Verfahren aufweist:

Durchführen eines Verfahrens gemäß Anspruch 1, 2 oder 3 in Bezug auf eine Mehrzahl von Bildsignalen, und

Gruppieren der Bilder entsprechend deren jeweiligen Charakterisierungssignalen.

**Revendications**

**1.** Procédé pour générer un signal de caractérisation pour un signal d'image, le procédé étant **caractérisé par** les étapes consistant à :

(a) projeter des données de pixel d'un signal d'image le long d'un axe prédéterminé ;
(b) calculer une valeur de quantification de motif pour les données du pixel projeté et décomposer les données de l'image projetée ;
(c) débruiter de manière répétitive les données décomposées à l'aide d'une valeur seuil, calculer une nouvelle valeur de quantification de motif pour les données débruitées et accroître la valeur seuil de débruitage jusqu'à ce que la valeur de quantification ne soit plus la même pour deux itérations successives ; et
(d) générer un signal de caractérisation de répétitivité de motif pour ledit signal d'image à l'aide de l'avant-dernière valeur de quantification de motif et de la valeur seuil,

où ladite décomposition s'effectue sur la base d'ondelettes et lesdites données décomposées sont le résultat de la somme moyennée de ladite décomposition.

**2.** Procédé selon la revendication 1, dans lequel :

l'étape (b) comprend de décomposer de manière répétitive les données de pixel projeté d'un niveau vers le bas et de calculer une nouvelle valeur de quantification de motif jusqu'à ce que la nouvelle valeur de quantification de motif diffère de la précédente valeur de quantification de motif et l'avant-dernière valeur de quantification obtenue à l'étape (b) est utilisée comme valeur de quantification initiale dans l'étape (c) ; et
lesdites décompositions s'effectuent sur la base d'ondelettes et le résultat de la somme moyennée de chacune desdites décompositions répétées constitue les données de pixel projeté pour l'itération suivante.

**3.** Procédé selon les revendications 1 ou 2, dans lequel le signal de caractérisation est basé sur l'avant-dernière valeur de quantification et sur le seuil.

**4.** Appareil de caractérisation de signal d'image comprenant une entrée de signal d'image, une sortie de signal de caractérisation et un moyen de traitement, **caractérisé en ce que** le moyen de traitement est programmé pour exécuter un procédé selon les revendications 1, 2 ou 3 sur un signal reçu au niveau de ladite entrée de signal et délivrer en sortie le signal de caractérisation résultant au niveau de ladite sortie du signal.

**5.** Procédé de regroupement d'images ayant des caractéristiques de texture similaires à l'intérieur d'une base de données d'images dans laquelle une pluralité d'images sont stockées, le procédé comprenant les étapes consistant à :

exécuter un procédé selon les revendications 1, 2 ou 3 sur une pluralité de signaux d'images, et
regrouper les images selon leurs signaux de caractérisation respectifs.

# FIG. 1

```
        ( START )
            │
            ▼
┌─────────────────────────────────────┐
│ PROJECT IMAGE ON PREDETERMINED AXIS  │──102
└─────────────────────────────────────┘
            │
            ▼
┌─────────────────────────────────────┐
│  CALCULATE PATTERN QUANTIZATION VALUE│──103
└─────────────────────────────────────┘
            │
            ▼
┌─────────────────────────────────────┐
│      DECOMPOSE PROJECTED IMAGE       │──104
│         DOWN ONE LEVEL               │
└─────────────────────────────────────┘
            │
            ▼
┌─────────────────────────────────────┐
│      DENOISE USING PREDETERMINED     │──106
│          THRESHOLD VALUE             │
└─────────────────────────────────────┘
            │
            ▼
┌─────────────────────────────────────┐
│  CALCULATE PATTERN QUANTIZATION VALUE│──108
└─────────────────────────────────────┘
            │
            ▼
```

110

IS PREVIOUS PATTERN QUANTIZATION VALUE IDENTICAL TO CURRENT PATTERN QUANTIZATION VALUE?

YES

112

INCREASE THRESHOLD VALUE

NO

```
┌─────────────────────────────────────┐
│  DETERMINE PREVIOUS PATTERN          │──114
│  QUANTIZATION VALUE AS FINAL         │
│  PATTERN QUANTIZATION VALUE          │
└─────────────────────────────────────┘
            │
            ▼
┌─────────────────────────────────────┐
│  DESCRIBE PATTERN REPETITIVENESS OF  │──116
│  IMAGE BASED ON PATTERN QUANTIZATION │
│     VALUE AND THRESHOLD VALUE        │
└─────────────────────────────────────┘
            │
            ▼
          ( END )
```

**FIG. 2**

```
                              ( START )
                                  │
                                  ▼
           ┌──────────────────────────────────────────┐
           │   PROJECT IMAGE ON PREDETERMINED AXIS     │──202
           └──────────────────────────────────────────┘
                                  │
                                  ▼
           ┌──────────────────────────────────────────┐
           │   CALCULATE PATTERN QUANTIZATION VALUE    │──204
           └──────────────────────────────────────────┘
                                  │
        ┌────────────────────────▶│
        │                         ▼
        │  ┌──────────────────────────────────────────┐
        │  │   DECOMPOSE RESULT DATA DOWN ONE LEVEL    │──206
        │  └──────────────────────────────────────────┘
        │                         │
        │                         ▼
        │  ┌──────────────────────────────────────────┐
        │  │   CALCULATE PATTERN QUANTIZATION VALUE    │──208
        │  └──────────────────────────────────────────┘
        │                         │
        │                         ▼
        │                 ╱───────────────╲   210
        │                ╱   IS DECOMPOSED  ╲
        │      YES      ╱  PATTERN QUANTIZATION╲
        └──────────────◀ VALUE IDENTICAL TO     │
                        ╲ PREVIOUS PATTERN      ╱
                         ╲ QUANTIZATION VALUE? ╱
                          ╲───────────────────╱
                                  │ NO
                                  ▼
           ┌──────────────────────────────────────────┐
           │   DETERMINE PREVIOUS LEVEL AS FINAL LEVEL │──212
           └──────────────────────────────────────────┘
                                  │
        ┌────────────────────────▶│
        │                         ▼
        │  ┌──────────────────────────────────────────┐
        │  │      DENOISE USING PREDETERMINED          │──214
        │  │          THRESHOLD VALUE                  │
        │  └──────────────────────────────────────────┘
        │                         │
        │                         ▼
        │  ┌──────────────────────────────────────────┐
        │  │   CALCULATE PATTERN QUANTIZATION VALUE    │──216
        │  └──────────────────────────────────────────┘
        │                         │
        │                         ▼
        │                 ╱───────────────╲   218
        │         YES    ╱   IS PREVIOUS    ╲
        │   220         ╱ PATTERN QUANTIZATION╲
        │    │         ╱  VALUE IDENTICAL TO   ╲
   ┌─────────┐◀──────◀ CURRENT PATTERN         │
   │INCREASE │        ╲ QUANTIZATION VALUE?    ╱
   │THRESHOLD│         ╲    VALUE?            ╱
   │ VALUE   │          ╲───────────────────╱
   └─────────┘                  │ NO
                                ▼
           ┌──────────────────────────────────────────┐
           │   DETERMINE PREVIOUS PATTERN              │──222
           │   QUANTIZATION VALUE AS FINAL             │
           │   PATTERN QUANTIZATION VALUE              │
           └──────────────────────────────────────────┘
                                │
                                ▼
           ┌──────────────────────────────────────────┐
           │ DESCRIBE PATTERN REPETITIVENESS OF        │──224
           │ IMAGE BASED ON PATTERN QUANTIZATION       │
           │ VALUE AND THRESHOLD VALUE                 │
           └──────────────────────────────────────────┘
                                │
                                ▼
                            ( END )
```